# EUROPEAN PATENT APPLICATION

(11) **EP 4 272 984 A1**
(43) Date of publication of application: **08.11.2023**
(21) Application number: 23171276.1
(22) Date of filing: 03.05.2023
(51) Int. Cl.: B60G 17/016, B60G 21/055

(54) **ACTIVE ROLL CONTROL POWER MANAGEMENT**

(30) Priority: 05.05.2022 GB 202206567
(71) Applicant: Jaguar Land Rover Limited, Coventry, Warwickshire CV3 4LF (GB)
(72) Inventor: Bouaru, Adrian, Coventry, CV3 4LF (GB); Wojtecki, Alexander, Coventry, CV3 4LF (GB)
(74) Representative: Jaguar Land Rover Patents Department

(57) **Abstract**

A control system (100) for a vehicle suspension system in a vehicle, the control system (100) comprising one or more controllers (110), the control system (100) configured to: receive (302) a high torque mode signal indicative of the vehicle operating in a high torque mode, the high torque mode signal being determined in dependence on a torque demand on the vehicle suspension system being above a threshold for a predetermined time period; determine (308) a maximum allowed value of the torque demand in dependence on the high torque mode signal and a current status of one or more components of the vehicle suspension system; and output (306) a torque demand signal indicative of the determined maximum allowed value of the torque demand.

## Description

### TECHNICAL FIELD

The present disclosure relates to energy management and managing operation of a subsystem within a vehicle, in particular in an active roll control system used in a vehicle suspension system. Aspects relate to a control system, to a system, to a vehicle, to a method, and to computer software.

### BACKGROUND

Vehicles (e.g. petrol, diesel, electric, hybrid) may employ active suspension systems, such as active roll control subsystems, for maintaining vehicle stability and driving attributes at a user level.

Maximum performance of an active roll control subsystem (along with maximum performance of any other subsystem within a vehicle (e.g. active springs, semi-active damping subsystems, or the like)) may deliver a best overall vehicle performance, as well as a best overall compromise between vehicle performance at the vehicle level and different vehicle-level attributes. However, extended usage of the maximum performance of the active roll control subsystem through a drive cycle may lead to the active roll control system operating within a region of poor efficiency and may therefore lead to overheating of the active roll control system. If left unchecked, overheating in a subsystem may result in reduced active roll control performance and may even lead to a forced shut down of the active roll control system. A control action may be taken to pre-emptively reduce subsystem performance with the aim of preventing forced shut down. However, in conventional vehicle systems, there is no determination of the current use case of the vehicle to determine a situation-appropriate response for each of the subsystems within the vehicle. This static interaction between the other subsystems then forces the other subsystems to enter into their own de-rated mode, thereby leading to all subsystems to operate in a reduced performance.

Therefore, there is a need for a control system within a suspension system of a vehicle whereby an active roll control subsystem is able to respond to the current usage case of the vehicle as well as a recognised period of extended usage of the maximum performance of the active roll control subsystem, such that the active roll control subsystem may continue to deliver a best possible vehicle attribute given the current use case and historical subsystem usage during a drive cycle.

It is an aim of examples disclosed herein to address one or more of the disadvantages associated with the prior art.

### SUMMARY OF THE INVENTION

Aspects and embodiments of the invention provide control systems for a vehicle suspension systems, vehicles, methods and computer software, as claimed in the appended claims

According to an aspect there is provided a control system for a vehicle suspension system in a vehicle, the control system comprising one or more controllers, the control system configured to: receive a high torque mode signal indicative of the vehicle operating in a high torque mode, the high torque mode signal being determined in dependence on a torque demand on the vehicle suspension system being above a threshold for a predetermined time period; determine a maximum allowed value of the torque demand in dependence on the high torque mode signal and a current status of one or more components of the vehicle suspension system; and output a torque demand signal indicative of the determined maximum allowed value of the torque demand. Advantageously, limiting torque demands allows components (e.g. actuators) to stay cooler and experience less wear during period where the a high torque demand is required.

When determining the maximum allowed value of the torque demand, the control system may be configured to: receive, from the one or more components of the vehicle suspension system, a current status signal of the one or more components of the vehicle suspension system, the current status signal indicating the current status of the one or more components of the vehicle suspension system; determine an adjustment parameter of the vehicle suspension system based on the received current status signal; and determine a torque reduction value, based on the adjustment parameter. Advantageously, the status of the components within the vehicle suspension system are taken into account when determining the state/performance zone of the vehicle suspension system.

The torque reduction value may be determined based on a mapping between the adjustment parameter and the torque reduction value. Advantageously, this allows for the vehicle to react in the same way each time when the same vehicle state is determined, for consistency.

The control system may be configured to: determine the adjustment parameter based on the received current status signal by comparing the received current status signal to a reference signal, the reference signal indicating a nominal state of the vehicle suspension system. Advantageously, this ensures that the correct current vehicle state is determined.

The control system may be configured to: set an operational mode modifier to indicate that the vehicle is operating in the high torque mode in dependence on determining that the vehicle is operating in the high torque mode; and determine the maximum allowed value of the torque demand based on the current status of the one or more components of the vehicle suspension system in dependence on the operational mode modifier indicating that the vehicle is in the high torque mode. Advantageously, it is ensured that the torque is reduced only when required to be and is not limited when it is not required to be limited.

The control system may be configured to: determine the maximum allowed value of the torque demand in dependence on a torque reduction factor, the torque reduction value, and the operational mode modifier; wherein the torque reduction factor indicates a maximum allowed torque reduction. Advantageously, this allows a minimum torque to always be exerted, such that the vehicle may still meet required safety characteristics.

The control system may be configured to: determine the maximum allowed value of the torque demand in dependence on a nominal torque demand and a product of the torque reduction factor, the torque reduction value, and the operational mode modifier. Advantageously, the present invention takes into account all of the states of the vehicle suspension system, current use case, and minimum torque demand allowed to determine the maximum allowed value of the torque demand.

The control system may be configured to: determine that the vehicle is operating in the high torque mode in dependence on one or more of: the torque demand of the vehicle suspension system being above the predetermined threshold for the predetermined time period; a received GPS signal, indicative of the location of the vehicle, matching a stored location, the stored location indicating a location in which the high torque mode is required; a received lateral acceleration signal indicating a lateral acceleration of the vehicle being above a predetermined lateral acceleration threshold for a second predetermined time period, the lateral acceleration signal being determined by a lateral acceleration sensor of the vehicle; and a received vehicle speed signal, indicating a speed of the vehicle being above a predetermined vehicle speed threshold for a third predetermined time period, the vehicle speed signal being determined by a vehicle speed sensor of the vehicle.

The torque demand on the vehicle suspension system may be an RMS value of the torque demand on the vehicle suspension system. Advantageously, this allows for only the longer term fluctuations to be considered and provides for appropriate triggering of the high torque mode.

The high torque mode may be a track driving mode. For example, the high torque mode may be a high performance mode, race mode, and/or a circuit mode. Advantageously, the control system aims to prevent overheating of components, which is more likely during track use.

The adjustment parameter may be determined from a plurality of adjustment parameters, wherein each of the plurality of adjustment parameters defines an available torque demand range with a different maximum torque demand value. Advantageously, accuracy of determining that the track use case is improved and progressive changes to be made are allowed, rather than on/off controls.

The one or more components of the vehicle suspension system may comprise: an actuator; an electronic control unit; and a power supply. Advantageously a number of components can be monitored and accounted for in the maximum torque calculation.

The current status of the one or more components of the vehicle suspension system may be a thermal status. Advantageously, this ensures that the components do not overheat and shut down. Further, the current status may be determined in dependence on a hysteresis relation. Advantageously, this prevents an inappropriate selection or back and forth changing of de-rate zone/ state for the suspension system.

The control system may be configured to: transmit the torque demand signal to one or more other systems within the vehicle, for use in one or more vehicle characteristic calculations. Advantageously, the determined torque demand signal is a global variable and can be used for calculations in other systems within the within the vehicle, so that any results are appropriate for the current characteristics of the suspension system.

In a further aspect, there is provided a method, comprising: receiving a high torque mode signal indicative of a vehicle operating in a high torque mode, the high torque mode signal being determined in dependence on a torque demand on a vehicle suspension system of the vehicle being above a threshold for a predetermined time period; determining a maximum allowed value of the torque demand in dependence on the high torque mode signal and a current status of one or more components of the vehicle suspension system; and outputting a torque demand signal indicative of the determined maximum allowed value of the torque demand.

The method may comprise: receiving, from the one or more components of the vehicle suspension system, a current status signal of the one or more components of the vehicle suspension system, the current status signal indicating the current status of the one or more components of the vehicle suspension system; determining an adjustment parameter of the vehicle suspension system based on the received current status signal; and determining a torque reduction value, based on the adjustment parameter.

Further, the method may comprise: determining the adjustment parameter based on the received current status signal by comparing the received current status signal to a reference signal, the reference signal indicating a nominal state of the vehicle suspension system.

The method may also comprise: setting an operational mode modifier to indicate that the vehicle is operating in the high torque mode in dependence on determining that the vehicle is operating in the high torque mode; and determine the maximum allowed value of the torque demand based on the current status of the one or more components of the vehicle suspension system in dependence on the operational mode modifier indicating that the vehicle is in the high torque mode.

In a further aspect there is provided computer readable instructions which, when executed by a processor of any control system disclosed herein, are arranged to perform any method disclosed herein.

In a further aspect there is provide a non-transitory, computer-readable storage medium storing instructions thereon that, when executed by a processor of the any control system disclosed herein, causes the one or more electronic processors to carry out any method disclosed herein.

In a further aspect there is a system comprising a control system for a vehicle suspension system in a vehicle according to any control system disclosed herein; and an actuator of a roll control system.

In a further aspect there is provided a vehicle comprising any control system or a system disclosed herein.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a controller of a control system according to examples disclosed herein;
Figure 2a shows a controller and actuator set of a control system for a vehicle suspension system according to examples disclosed herein;
Figure 2b shows a control system for a vehicle suspension system according to examples disclosed herein;
Figures 3a and 3b show examples of a control system according to examples disclosed herein;
Figures 4a and 4b show an example of how a maximum allowed torque demand may be determined according to examples disclosed herein;
Figure 5 shows an example torque demand according to examples disclosed herein;
Figure 6 shows a method according to examples disclosed herein; and
Figure 7 shows a vehicle according to examples disclosed herein.

### DETAILED DESCRIPTION

Examples discussed herein provide a control system for a suspension system for use, for example, in the automotive industry. Active suspension systems may utilise mechatronic systems (MS) which may include a cascade of;
(a) high level vehicle control generating system demand signals (e.g. torque demand) to influence vehicle motion;
(b) low level control providing control signals to the actuator(s) (motor control etc) to deliver the demanded signal from the high level control; and
(c) motor/hydraulic and associated mechanical components to deliver the physical manifestation of the demanded signal.

The performance of the combination of steps (b) and (c) may be influenced by a plurality of control parameters/boundary conditions. For example, they may be boundary conditions for a maximum motor speed, a maximum motoring current, a maximum regeneration current, one or more scalar gains applied to feed forward signals, a supplied voltage, and/or a maximum motor temperature.

Considering different types of vehicle usage (e.g. on-road vs off-road) and varying physical conditions of the MS (e.g. temperature), the optimal settings for the control parameters/ boundary conditions may differ (as may the most important performance metrics).

Within a vehicle, during specific use cases (e.g. a track usage, high performance usage, race usage, and/ or circuit usage), actuators of an active roll control system may be demanded to generate very high levels of torque for extended periods of time to deliver a desired vehicle level attribute (which may be perceived as vehicle dynamics, thermal availability and power consumption). However, a motor inside the active roll control system actuator may then be used in a region of poor efficiency and may therefore generate a significant amount of excess heat. This may lead to actuator overheating occurring.

Conventional systems may be configured in a static manner to deliver a compromise to force the motor inside the active roll control system to operate in more efficient region. For example, conventional systems may be configured to achieve this by setting a limit on a torque demand of an active roll control system as a function of temperature only. This may lead to reduced performance during use cases where optimal performance from the multiple MS in a vehicle is required and/or may lead to reducing the performance at too late a point to prevent components from overheating and subsequently shutting down.

Examples disclosed herein disclose a control system of a vehicle suspension system, wherein the control system is configured to receive a high torque mode signal, indicating that the vehicle is operating in a high torque mode. The control system is configured to determine a maximum allowed value for a torque demand based on the high torque mode signal and a current status of one or more components of the vehicle suspension system. The control system is configured to output a torque demand signal in accordance with the determined maximum allowed torque value. That is, examples disclosed herein take into account a current use case, and current component status, to accordingly limit a torque demand on the vehicle suspension system to prevent components from overheating, and overall, may improve the use of components during a drive cycle.

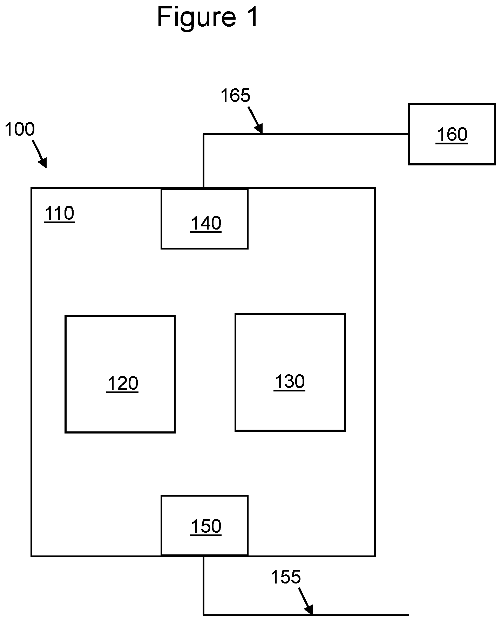

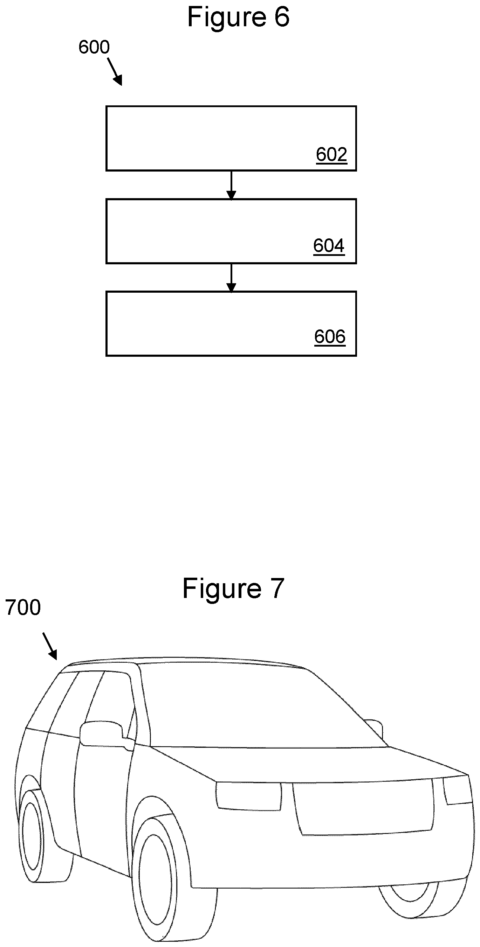

With reference to Figure 1, there is illustrated a control system 100 for a vehicle. The vehicle may be a wheeled vehicle, such as an automobile, or other types of vehicle, as illustrated in Figure 6.

The control system 100 as illustrated in Figure 1 comprises one controller 110, although it will be appreciated that this is merely illustrative and in other examples the control system 100 may comprise more than one controller 110. The controller 110 comprises processing means 120 and memory means 130. The processing means 120 may be one or more electronic processing device 120 which operably executes computer-readable instructions. The memory means 130 may be one or more memory device 130. The memory means 130 is electrically coupled to the processing means 120. The memory means 130 is configured to store instructions, and the processing means 120 is configured to access the memory means 130 and execute the instructions stored thereon.

The controller 110 comprises an input means and an output means. The input means may comprise an electrical input 140 of the controller 110. The output means may comprise an electrical output 150 of the controller 110. The input 140 is arranged to receive one or more input signals 165, for example from an external computing device e.g. a sensor 160. There may be one or more sensors which provide information to the controller input 140. The output 150 is configured to provide one or more output signals 155.

The processing means 120 is configured to receive a high torque mode signal indicative of the vehicle operating in a high torque mode. The high torque mode signal is determined in dependence on a torque demand on the vehicle suspension system being above a threshold for a predetermined time period. The processing means 120 is also configured to determine a maximum allowed value of the torque demand in dependence on the high torque mode signal and a current status of one or more components of the vehicle suspension system.

The output 150 is arranged to output a torque demand signal indicative of the determined maximum allowed value of the torque demand. For example, the torque demand signal may be output to the controller to indicate that a torque demand sent to the vehicle suspension system should not exceed the maximum allowed value. That is, the torque demand signal may be saturated at or otherwise limited to the determined maximum allowed value of the torque demand.

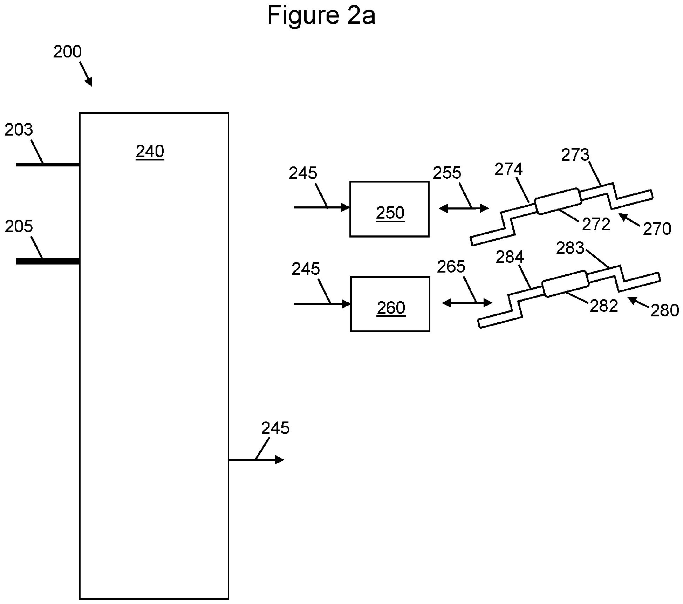

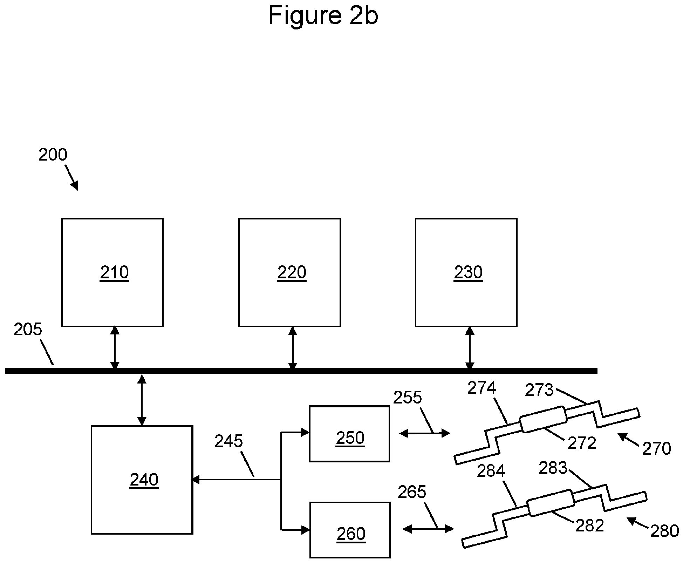

Figures 2a and 2b illustrate example control systems 200 for a suspension system of a vehicle comprising front and rear anti-roll bars. A suspension system of a vehicle may comprise anti-roll bars 270, 280 which are controlled using an anti-roll control system. The anti-roll control system acts to control the anti-roll bars, to control a roll of a body of the vehicle and reduce the impact of disturbances from a road surface. The anti-roll control system may be electromechanical and/or hydraulic. Anti-roll bars 270, 280 may typically comprise stabiliser bars, typically metal, which join the vehicle suspension on either side of the vehicle axle, usually through drop links, and connect to a rotational actuator situated between the mounting points to the vehicle chassis. Each side of the anti-roll bar 270, 280 is able to rotate relative to the other side when a motor of the anti-roll control system is not energised. When the motor control is enabled (i.e. delivering torque), the anti-roll bar may act to generate torque so as to oppose an externally applied rotation. The anti-roll bars may be controlled to compensate for some vehicle-induced movements such as body roll, for example from driving around a corner. Body roll can cause the wheels at the side of the vehicle inside the turn to reduce their vertical contact patch force with the road surface. Anti-roll bars may be controlled to counteract this effect and reduce the body roll effect, by transferring at least part of the additional load on the wheels at the side of the vehicle outside the turn to those wheels at the inside. For example by providing a torsional effect across the anti-roll bar which is transmitted to the wheels through the drop links so as to act to pull the inside wheels towards the chassis and push the outside wheels away from the chasses so as to even out the imbalance in load on the wheels caused by cornering.

A typical suspension system may comprise passive front 270 and rear 280 anti-roll bars provided respectively between the front and rear pairs of wheels of a standard four-wheel vehicle. In a vehicle with an active roll control system, an anti-roll bar 270, 280 may respectively comprise two anti-roll bar ends 273, 274; 283, 284 connected together by a central housing having an actuator 272, 282. The central housing may additionally have one or more of a gearbox, sensors, and dedicated actuator controllers. The actuator 272, 282 acts to provide an actively controlled torque, rather than a fixed torsional stiffness provided by passive anti-roll bars. One or more sensors may monitor the movement of the vehicle, and provide the sensed parameters as input to the active roll control system to control the actuator and provide a suitable torque to the anti-roll bar. The two ends of the anti-roll bar 273, 274; 283, 284) may be identical, or may be non-identical.

Figure 2a shows an example control system 200 for a suspension system a vehicle, communicatively connected to front and rear anti-roll bars 270, 280. The control system 200 comprises a controller 240 which is connected by a communication channel 245 to anti-roll bar controllers 250, 260 configured to respectively control front and rear anti-roll actuators 272, 282. The controller 240 may be the controller 110 of Figure 1. The controller 240 may comprise one or more of the controllers 110 of Figure 1. In an example, the controller 240 may be a master controller for an electronic active roll control system in the vehicle. The controller 240 may host a vehicle level control strategy and actuation control for the electronic active roll control system in the vehicle

The controller 240 may be configured to receive one or more sensor signal 203 from one or more sensors attached to the vehicle. The one or more sensor signal 203 may comprise, for example: a signal from a respective suspension height sensor of the vehicle suspension; a signal from a respective hub acceleration sensor of the vehicle; and a signal from a respective measured torque sensor for the anti-roll bar actuators 272, 282. A signal from a respective motor position sensor for the anti-roll bar actuators 272, 282 may be communicated to the controller 240 via the bidirectional communication channel/link 245. The respective suspension height sensor may be configured to determine a sensor signal indicative of one or more of a height of a left side and a height of a right side (e.g. at the individual wheels) of the front and/or rear of the vehicle suspension. The respective motor position sensor may be configured to determine a sensor signal indicative of a position of a respective motor of the anti-roll bar actuators 272, 282. The respective hub acceleration sensor may be configured to determine a sensor signal indicative of an acceleration of one or more hub of a wheel of the vehicle. The torque sensor may provide a measure of an existing torque generated in the system, as a result of a target torque demand being requested by the controller 240.

The controller 240 may be configured to receive one or more communication signal via a communications bus 205. The communications bus 205 may be configured to deliver data to the controller 240 from other subsystems within the vehicle. For example, the communications bus 205 may be configured to communicate a signal indicating a status of one or more modules 210, 220, 230 that are in communicative connection with the controller 240 to the controller 240. In another example, the communications bus 205 may be configured to communicate a command from the controller 240 to the one or more modules 210, 220, 230 that are in communicative connection with the controller 240. The one or more modules 210, 220, 230, are discussed further in relation to Figure 2b below. Signals transmitted over connections 203 or 245 may alternatively or additionally be transmitted over communications bus 205.

The controller 240 may be configured to generate torque demand signals to influence a vehicle's motion via the anti-roll actuators 272, 282. An actuator provided between a front pair of wheels of a vehicle may be called a front actuator. A front active roll control (FARC) module may be electrically connected to the front actuator, and may comprise the controller 250 to control the front actuator 272. Similarly, an actuator provided between a rear pair of wheels of a vehicle may be called a rear actuator. A rear active roll control (RARC) module may be electrically connected to the rear actuator and may comprise a controller 260 to control the rear actuator 282.

The front and rear anti-roll actuators 272, 282 comprise an electric motor which is controllable by the respective anti-roll controller 250, 260. Each of the front and rear anti-roll actuators 272, 282 may be controlled by its own respective anti-roll controller in some examples, or multiple anti-roll actuators may be controlled by a common anti-roll controller in some examples. Each of the anti-roll actuators 272, 282 may be individually controlled in some cases to improve the management of the roll of the body of the vehicle. The front and rear anti-roll actuators 272, 282 may be controlled by a control signal which is generated by the controller 240. The controller may generate and output this control signal, through the bidirectional communication channel 245 to the anti-roll bar controllers 250, 260, which then use the communication channel 245 to exchange data with the controller 240. The control signal may carry instructions to be implemented by the actuator, for example by providing a torque via a torque demand to apply to the anti-roll bar. For example, as discussed above, when the vehicle is cornering, a control signal may be transmitted to the anti-roll bar controllers 250, 260, which may in turn transmit a control signal via the interface 255, 265, so that the front and rear anti-roll actuators 272, 282 may mitigate a body roll effect. Similarly, anti-roll bar controllers 250, 260 may transmit measured values from the anti-roll actuators to the controller 240 through bidirectional communication channel 245.

Figure 2b shows an example control system 200 for a vehicle comprising one or more modules 210, 220, 230, a controller 240 and front and rear anti-roll bars 270, 280. As in Figure 2a, the control system 200 comprises a controller 240 which is connected by a bidirectional communication channel 245 to controllers 250, 260 configured to respectively control front and rear anti-roll bar actuators 272, 282. Further, the controller 240 of the control system 200 is in a communicative connection to the one or more modules 210, 220, 230 via a communications bus 205. The one or more modules 210, 220, 230 may be configured to perform functions relating to power supply of the suspension system. Module 210 may be a power control module configured to control a power supply system for the suspension system. Module 220 may be a conversion module configured to convert electrical energy output from the vehicle power supply system. In an example, the conversion module 220 may be a DC-DC converter. Module 230 may be a capacitor module configured to store electrical energy for the suspension system. In an example, the capacitor module 230 may comprise one or more of a capacitor, a super capacitor, and a battery, configured to store electrical energy from the power supply system for the suspension system. Together, conversion module 220 and capacitor module 230 may be configured to supply electrical energy to the controllers 250, 260, such that the anti-roll bar actuators 272, 282 can be actuated. Figure 2b illustrates modules 210, 220, 230 as individual modules. However, there may be examples whereby components within the modules 210, 220, and 230 are included in a single module. Similarly, communications links 205 and 245 may be the same in some examples.

It will be appreciated that the control systems 200 of Figures 2a-2b may comprise one or more further connected controllers in some examples, and/or one or more further electrical or communication connections.

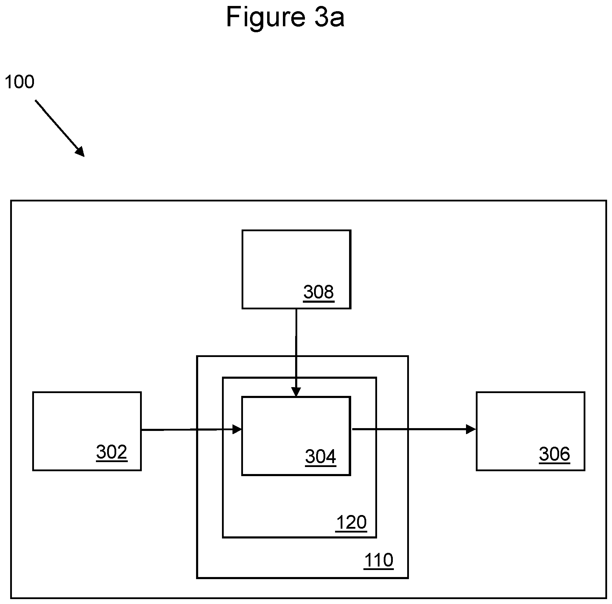

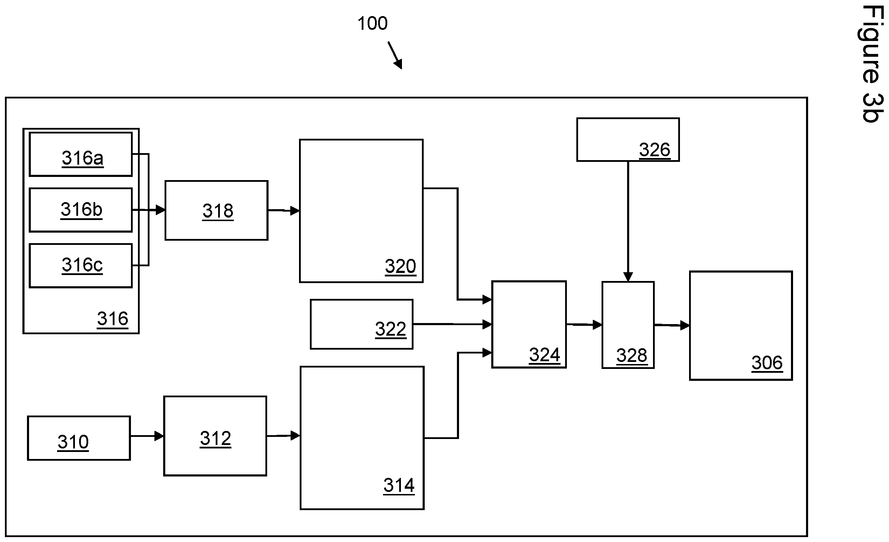

Figures 3a and 3b show example control systems 100 such as that described in relation to Figure 1, for a vehicle suspension system in a vehicle. In some examples, the control system 100 may be a control system for an active-roll control system within a vehicle suspension system, as described in relation to Figures 2a-2b. As in the example of Figure 1, the control system 100 may comprise one or more controllers.

Figure 3a illustrates schematically a controller 110 of a control system for a vehicle suspension system in a vehicle. The controller 110 comprises a processor 120. The control system 100 is configured to receive a high torque mode signal 302 and a current status 308 of one or more components of the vehicle suspension system as input; determine a maximum allowed value of the torque demand 304, and output a torque demand signal 306.

Figure 3b illustrates schematically process steps in a control system 100 of a control system for a vehicle suspension system in a vehicle. Step 316 represents various current status signals of components of the vehicle suspension system (three current status signals 316a-c are shown here as an example but there may be more or less than three in other examples). Step 318 represents the control system 100 determining an adjustment parameter based on the current status signal and follows step 316. The adjustment parameter may in some examples may represent an overall system status band indicative of the status signals of step 316. Step 320 represents the control system 100 determining a torque reduction value based on the adjustment parameter and follows step 318.

Step 310 represents a torque demand on the vehicle suspension system. Step 312 represents the control system 100 determining if the torque demand on the vehicle suspension system is above a threshold for a predetermined time period and follows from step 310. Step 314 represents the control system 100 setting an operational mode modifier and follows from step 312. Step 322 represents a torque reduction factor.

Step 324 represents the control system 100 determining the product of the torque reduction value 320, torque reduction factor 322, and operational mode modifier 314. The torque reduction value 320, torque reduction factor 322 and operational mode modifier 314 are received as input to step 324. Step 324 provides, as output, the product of the torque reduction value 320, torque reduction factor 322, and operational mode modifier 314. Step 326 represents a nominal torque demand. Step 328 represents the control system 100 determining a summation of the nominal torque demand 326 and the product of the torque reduction value 320, torque reduction factor 322, and operational mode modifier 314. The nominal torque demand 326 and the product of the torque reduction value 320, torque reduction factor 322, and operational mode modifier 314 torque are received as input to step 328. Step 328 provides, as output, the result of the summation of the nominal torque demand and the product of the torque reduction value 320, torque reduction factor 322, and operational mode modifier 314 represented by step 306. Step 306 therefore may be considered as the maximum allowed value for the torque demand signal of the vehicle suspension system that is output by the control system 100.

The control system 100 is configured to receive a high torque mode signal indicative of the vehicle operating in a high torque mode, illustrated as step 302. In some examples, the high torque mode may be a track driving mode (e.g. high performance usage, race usage, circuit usage and/or the like), wherein lateral accelerations (causing the body roll and thus requiring active roll assistance) are likely to be much greater and over much longer periods of time than in normal vehicle usage. That is, the high torque mode indicates that the actuators 272, 282 are required to exert a sustained high torque in order to provide the anti-roll function. The higher lateral accelerations generate a higher lateral load transfer from the vehicle mass and the suspension system. Therefore, a high torque from the active roll control system is required to counter this high lateral load transfer to deliver a required vehicle level behaviour. In some examples the high torque mode may be referred to as a "sustained high torque mode". The high torque mode signal is determined in dependence on a torque demand on the vehicle suspension system being above a threshold for a predetermined time period, illustrated as step 312 of Figure 3b. In some examples, the torque demand or a metric derived from the torque demand may be compared to the threshold. For example, an efficiency metric, indicating a region of efficiency the suspension system is operating in, may be derived from the torque demand (e.g. based on a mapping between the torque demand and an efficiency region for the suspension system determined through experimentation) and the efficiency metric may be compared to the threshold to determine whether the vehicle is in a high torque mode. In other examples, the metric derived from the torque demand may be a moving RMS of the torque demand, and/or the output of a band-pass filter applied to the torque demand.

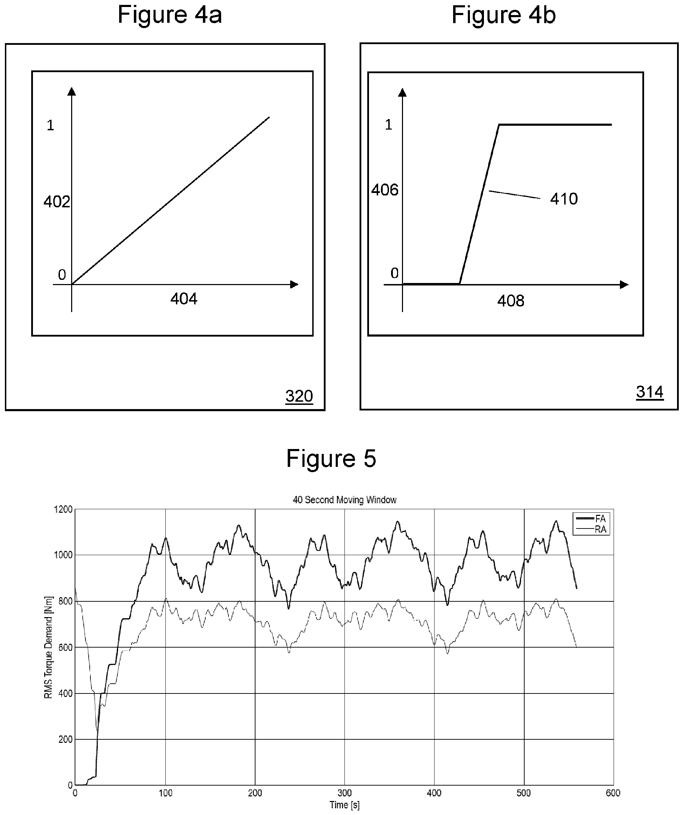

The predetermined threshold may be determined through testing of different high torque use cases. For example, during a track driving of a vehicle, it may be found that the vehicle consistently requires for certain periods of time, a torque demand of at least half a maximum available actuator torque. For example, if the maximum available actuator torque is 1400 Nm, the threshold may be set at 700 Nm. To determine whether the torque demand on the vehicle suspension system is above the threshold for the predetermined time period, the control system 100 may continuously monitor and/or receive, from the vehicle suspension system, the torque demand on the vehicle suspension system, illustrated as step 310 in Figure 3b. In some examples, the real-time variation in torque demand may be monitored and compared to the threshold. In some examples, the torque demand may vary very quickly, and therefore the torque demand for the suspension system may be a root mean square (RMS) value of the torque demand on the vehicle suspension system. As such, the control system 100 may be able to monitor a more stable characteristic of the torque demand over time. As seen illustrated in Figure 5, plotting time (x-axis) against RMS torque demand (y-axis) on the front (FA) and rear (RA) actuators, respectively, of the vehicle suspension system, the RMS value of the torque demand on the suspension system may be consistently be above a torque demand threshold. For example, in Figure 5, the threshold may be set at 700 Nm.

The control system 100 may be configured to determine that the vehicle is operating in the high torque mode in dependence on a received location signal in some examples. In some examples, the received location signal is a GPS signal. The control system 100 may be configured to receive the GPS signal from a location sensor of the vehicle, capable of determining a location of the GPS sensor. The GPS signal may be indicative of a location of the vehicle. The memory means 130 may have stored thereon one or more locations (corresponding to GPS signals) in which the high torque mode is required by the vehicle. For example, the stored locations may be the location of a plurality of different racing tracks. Therefore, when the received GPS signal matches (i.e. is determined to correspond to) the stored location, the control system 100 may determine that the vehicle is operating in the high torque mode. In some examples, the process of determining whether the GPS signal matches the stored location may be performed by a control system external to the vehicle. In such an examples, the control system 100 may be configured to receive an signal indicating that the GPS signal the matches the stored location. For any of the above examples, by using more than one signal to determine that the vehicle is in a high torque mode, the control system 100 may be able to more accurately detect that the vehicle is operating in the high torque mode (i.e. detection of the high torque mode may be enhanced).

The control system 100 may be configured to determine that the vehicle is operating in the high torque mode in dependence on a received lateral acceleration signal. For example, the high torque mode may be characterised by a sustained high lateral acceleration by the vehicle. The control system 100 may be configured to receive the lateral acceleration signal from an acceleration sensor of the vehicle. The lateral acceleration signal may be indicative of a lateral acceleration of the vehicle being above a predetermined lateral acceleration threshold for a second predetermined time period. As with the torque demand signal, the predetermined lateral acceleration threshold and the second predetermined time period may be determined through testing of different high torque use cases. Further, as with the torque demand signal, one of a real-time variation in the lateral acceleration and an RMS value of the lateral acceleration may be monitored to compare the received lateral acceleration signal to the lateral acceleration threshold. Therefore, when the lateral acceleration of the vehicle is above the predetermined lateral acceleration threshold for the second predetermined time period, the control system 100 may determine that the vehicle is operating in the high torque mode.

The control system 100 may be configured to determine that the vehicle is operating in the high torque mode in dependence on a received vehicle speed signal. For example, the high torque mode may be characterised by a sustained high vehicle speed of the vehicle. The control system 100 may be configured to receive the vehicle speed signal from a vehicle speed sensor of the vehicle. The vehicle speed signal may be indicative of a speed of the vehicle being above a predetermined vehicle speed period for a third predetermined time period. As with the torque demand signal, the predetermined vehicle speed threshold and the third predetermined time period may be determined through testing of different high torque use cases. Further, as with the torque demand signal, one of a real-time variation in the vehicle speed and an RMS value of the vehicle speed may be monitored to compare the vehicle speed signal to the vehicle speed threshold. Therefore, when the vehicle speed signal of the vehicle is above the predetermined vehicle speed threshold for the third predetermined time period, the control system 100 may use this information to determine that the vehicle is operating in the high torque mode.

The control system 100 may be configured to determine that the vehicle is operating in the high torque mode in dependence on one or more of: the torque demand of the vehicle suspension system being above the predetermined threshold for the predetermined time period; the received GPS signal, indicative of the location of the vehicle, matching a stored location, the stored location indicating a location in which the high torque mode is required; the received lateral acceleration signal indicating a lateral acceleration of the vehicle being above a predetermined lateral acceleration threshold for a second predetermined time period, the lateral acceleration signal being determined by a lateral acceleration sensor of the vehicle; and the received vehicle speed signal, indicating a speed of the vehicle being above a predetermined vehicle speed threshold for a third predetermined time period, the vehicle speed signal being determined by a vehicle speed sensor of the vehicle. Advantageously, by using more than one signal to determine that the vehicle is in a high torque mode, the control system 100 may be able to more accurately detect that the vehicle should be operating in the high torque mode.

The control system 100 is configured to determine a maximum allowed value of the torque demand, illustrated as step 304. The maximum allowed value of the torque demand is determined in dependence on the high torque mode signal and a current status 308 of one or more components of the vehicle suspension system. That is, the status of the one or more components of the vehicle suspension system are taken into account when determining the maximum allowed value for the torque demand. The current status 308 may be understood to indicate how the one or more components are performing under current usage. The current status 308 of each of the components may be determined by the respective components and self-reported to the control system 100. In some examples, the current status 308 of the one or more components of the vehicle suspension system may be a thermal status of the one or more components. In this example, a current status 308 may indicate that a component (e.g. an actuator, an electronic control unit, and/or a power supply) is operating at a high thermal status and thus at danger of overheating. That is, even though each of the one or more components have an associated current status, the control system 100 may be configured to determine the current status of the one or more components based on the one component that is closest to overheating / shutting down. For example, in the above example whereby the current status is a thermal status, the control system 100 is configured to determine the current status 308 of the one or more components of the vehicle suspension system based on the one component closest to its thermal limit. As such, the current status may be considered may be understood as an indication for how close the one or more components of the vehicle suspension system are to overheating/ shutting down. In some examples the current status 308 of the one or more components of the vehicle suspension system may be one or more of a power availability, a remaining electronic charge, or similar.

The control system 100, when determining the maximum allowed value of the torque demand, may be configured to receive, from the one or more components of the vehicle suspension system, a current status signal, illustrated as step 316a, 316b, and 316c (collectively step 316) in Figure 3b, of the one or more components of the vehicle suspension system. The current status signal may indicate the current status, discussed above, of the one or more components of the vehicle suspension system. The control system 100 may be configured to determine an adjustment parameter of the vehicle suspension system, based on the received current status signals. The control system 100 may be configured to determine a torque reduction value, based on the adjustment parameter.

The control system 100 may be configured to determine the adjustment parameter of the vehicle suspension system, based on the received current status signal, illustrated at step 318 in Figure 3b. The control system 100 may determine the adjustment parameter based on the received current status signal by comparing the received current status signal to a reference signal. The reference signal may indicate a nominal state of the vehicle suspension system. For example, the nominal state may indicate a status of the vehicle suspension system when the vehicle is being used in a normal usage (i.e. while not requiring the high torque mode). That is, the nominal state may indicate a "benchmark" status that is to be expected of the vehicle suspension system. As such, the adjustment parameter may be understood to relate to how far from operating in the nominal state the vehicle suspension system is, thereby indicating how close the one or more components of the vehicle suspension system are to overheating/ shutting down. As such, it may be understood by the skilled person that the larger the current status is in comparison to the reference signal, the higher the chance of an overheating / shutting down event, and therefore the lower the determined maximum allowed value of the torque demand.

In some examples, the adjustment parameter may be determined from a plurality of adjustment parameters. Each adjustment parameter within the plurality of adjustment parameters may define an available torque demand range, each with a different maximum torque demand value. As such, each adjustment parameter may be understood to relate to an overall status band. Each of the plurality of adjustment parameters may respectively indicate a different result from the comparison of the current status signal to the reference signal. For example, there may be at least an adjustment parameter for when the current status signal is less than the reference signal; when the current status signal is equal to the reference signal; and when the current status signal is more than the reference signal. The different adjustment parameters and their associated maximum torque demand values may be determined during testing. For example, for each adjustment parameter (i.e. at different current statuses of the one or more components), it may be possible to monitor the effect on the current status of the one or more components when limiting the vehicle suspension system to various different maximum torque demands. The plurality of adjustment parameters and their associated maximum torque demand values may be stored in the memory means 130 and may be preloaded into the memory means 130 upon manufacture of the vehicle.

The control system 100 may be configured to determine the torque reduction value, based on the adjustment parameter, illustrated as step 320 in Figure 3b. The torque reduction value may be indicative of a gain used for determining the maximum allowed torque demand, as will be discussed below. The control system 100 may be configured to determine the torque reduction value based on a mapping. The mapping may be stored in the memory means 130. The mapping may be between the adjustment parameter 404 and the torque reduction value 402, as is shown in Figure 4a. That is, the mapping may provide a conversion from the adjustment parameter 404 to the torque reduction value 402. In Figure 4a, the mapping is illustrated as being a linear mapping between the adjustment parameter 404 and the torque reduction value 402. However, in some examples, the mapping may be a non-linear mapping, such as logarithmic, exponential or otherwise. The torque reduction value may be normalised such that its value is between 0 and 1. For example, the torque reduction value may be equal to 0 when the current status signal is equal to or less than the reference signal. As another example, the torque reduction value may be equal to more than 0 when the current status signal is greater than the reference signal. As yet another example, the torque reduction value may be equal to 1 when the current status signal is at a maximum difference from the reference signal (e.g. when the current status signal indicates that the one or more components is operating at their maximum current status (e.g. maximum thermal limit)).

The control system 100 may be configured to set an operational mode modifier, illustrated as step 314 of Figure 3b. The operational mode modifier may indicate that the vehicle is operating in the high torque mode. That is, the operational mode modifier indicates the current use case of the vehicle based on the torque demand. The control system 100 may be configured to set the operation mode modifier in dependence on determining that the vehicle is operating in the high torque mode. The control system 100 may set an operational mode modifier to indicate that the vehicle is operating in the high torque mode. That is, upon the control system 100 receiving the high torque mode signal, the control system 100 is configured to set the operational mode modifier to indicate that the vehicle is operating in the high torque mode.

The control system 100 may be configured to determine the maximum allowed value of the torque demand based on the current status of the one or more components of the vehicle suspension system and in dependence on the operational mode modifier indicating that the vehicle is in the high torque mode. As such, the operational mode modifier may be understood to be a system level on/off indicator for the high torque mode. The operational mode modifier may have configurable values between 0 and 1. Figure 4b illustrates a change in the operation mode modifier 406 values with the adjustment parameter/torque demand 408. As shown in Figure 4b, the operational mode modifier 406 values, when switching from 0 to 1 or 1 to 0, may be gradually changed based on the adjustment parameter/torque demand 408 (the gradual change being indicated by gradient 410 in Figure 4b). Advantageously, by gradually changing the operational mode modifier from one value to another, the control system 100 may prevent any sharp changes in vehicle characteristics which may be reported as errors by a user and/or may have caused damage to components of the vehicle. For example, when the high torque mode signal is not received by the control system 100, and thus the operational mode modifier is not set to indicate the that the vehicle is operating in the high torque mode, the operational mode modifier may be equal to 0. As another example, when the high torque mode signal is received by the control system 100, and thus the operational mode modifier is set to indicate the that the vehicle is operating in the high torque mode, the operational mode modifier may be equal to 1 and the control system 100 may be configured to gradually change the value of the operational mode modifier from 0 to 1.

The control system 100 may be configured to determine the maximum allowed value of the torque demand in dependence on a torque reduction factor, the torque reduction value determined based on the current status of the one or more components of the vehicle suspension system; and the operational mode modifier. The torque reduction factor may indicate the maximum allowed torque reduction, illustrated at step 322 in Figure 3b, and, as such, the torque reduction factor may also be referred to as a "torque reduction delta". That is, the torque reduction factor ensures that the determined maximum allowed torque demand is larger than a predetermined torque demand. This may help ensure that a minimum torque demand required for the vehicle to be operated safely enough to meet a safety requirement of the vehicle suspension system is implemented, and may also help to ensure that a vehicle level characteristic (e.g. ride quality), that requires the minimum torque demand, is maintained for the vehicle. As an illustrative example, if the vehicle suspension system required a minimum torque demand of 700 Nm for a 1400Nm nominal system, in order to ensure all minimum requirements were met, the torque reduction factor may be set as 700 Nm. The specific value of the minimum torque demand may vary, depending on the vehicle type, a vehicle safety setting, a vehicle designated use, a vehicle size, and/or similar.

The control system 100 may be configured to determine the maximum allowed value of the torque demand in dependence on a nominal torque demand and a product of the torque reduction factor, the torque reduction value, and the operation mode modifier. In some examples the nominal torque demand may represent a nominal maximum possible torque demand deliverable by the anti-roll bar actuators 272, 282. The product of the torque reduction factor, the torque reduction value, and the operational mode modifier represents the maximum reduction in the torque demand, illustrated as step 324 in Figure 3b. The product of the torque reduction factor, the torque reduction value, and the operational mode modifier may be combined with the nominal torque demand. The nominal torque demand illustrated at step 326 in Figure 3b. In some examples, the product of the torque reduction factor, the torque reduction value, and the operational mode modifier and the nominal torque demand may be combined in a summation, illustrated at step 328 in Figure 3b. As such, the present invention is able to limit the maximum possible torque demands based on the vehicle operating in the high torque mode and the current status of one or more components of the vehicle suspension system.

As an illustrative example, the control system 100 may receive the high torque mode signal and therefore set the operational mode modifier as indicating that the vehicle is in the high torque mode. As such, the control system 100 may set the operation mode modifier to have a value of 1. The control system 100 may also determine the torque reduction value based on the determined adjustment parameter (indicating the current status of the one or more components of the vehicle suspension system). As such, the control system 100 may determine the torque reduction value to be 0.75. As an example, the nominal torque demand may be 1400 Nm and the torque reduction factor may be 700 Nm. As such, the control system may determine the maximum allowed value of the torque demand, based on the vehicle being in the high torque mode and the current status of the one or more components of the vehicle suspension system, to be equal to 1400 Nm - (700 Nm x 0.75 x 1) = 875 Nm. For example, the maximum reduction in the torque demand may occur when the torque reduction value and the operational mode modifier are both equal to 1.

The control system 100 is configured to output a torque demand signal indicative of the determined maximum allowed value of the torque demand, illustrated at step 306 in Figures 3a and 3b. For example, the control system 100 may output a torque demand signal, to an active roll control roll bar (e.g. the controllers 250, 260 of Figure 2a-2b), that does not exceed the determined maximum allowed value of the torque demand. As such, the control system 100 attempts to minimise the chance of overheating/ shutdown of one or more components within the vehicle suspension system by de-rating/ limiting the maximum allowed torque demand of the vehicle suspension system such that the current status of the one or more components may stabilise at or recover closer to a nominal, more efficient value.

In some examples, the control system 100 may transmit the torque demand signal to one or more other systems within the vehicle, for use in one or more vehicle characteristic calculations. That is, the determined torque demand signal, indicative of the determined maximum allowed value of the torque demand, may be a global variable. For example, the control system 100 may be configured to compensate for limiting the maximum allowed value of the torque demand for the vehicle suspension system using one or more other system within the vehicle. For example, the control system 100 may change the setting of an active damping system in response to the maximum allowed torque demand of the vehicle suspension system being limited. This may be advantageous to maintain a vehicle characteristic at the user level and/or prevent excessive wear on the one or more components of the vehicle.

The control system 100 may be configured to continuously (or periodically) monitor the current status of the one or more components of the vehicle suspension system and monitor whether the high torque mode signal has been received. That is, the control system 100 may continuously (or periodically) update the maximum allowed torque demand signal as the vehicle is being used. In some examples, the control system 100 may apply a hysteresis relation to the current status. That is, the control system 100 may be configured to delay, moderate and/or modify the current control action in relation to the actual current status based on one or more of recent control actions and the recent status. This is because some fluctuations in the current status of the one or more components may be transitory and may not represent the true current status of the vehicle as a whole. For example, the vehicle may be in the high torque mode and travel for a sustained period of time in a straight line (e.g. on a straight section of a racing track). While the torque demand may be low during the sustained period, it may not be appropriate to exit the high torque mode since there may be a corner at the end of the straight line, which may require a large torque demand being required by the vehicle suspension system. As such, by the control system 100 being configured to determine the current status in dependence on the hysteresis relation, the control system 100 may prevent inappropriate selection and/or back and forth changing of the current status of the suspension system.

Figure 6 shows a method 600 of a control system 100, 200 for a vehicle suspension system of a vehicle, such as the vehicle 700 in Figure 7. The control system as discussed above comprises one or more controllers.

The method 600 comprises: receiving 602 a high torque mode signal indicative of the a vehicle operating in a high torque mode, the high torque mode signal being determined in dependence on a torque demand on a vehicle suspension system of the vehicle being above a predetermined threshold for a predetermined time period; determining 604 a maximum allowed value of the torque demand in dependence on the high torque mode signal and a current status of one or more components of the vehicle suspension system; and outputting 606 a torque demand signal indicative of the determined maximum allowed value of the torque demand.

The method 600 may be performed by the control system 100, 200 illustrated in Figure 1. In particular, the memory 130 may comprise computer-readable instructions which, when executed by the processor 120, perform the method 600 according to an embodiment of the invention. The blocks illustrated in Figure 6 may represent steps in a method 600 and/or sections of code in a computer program configured to control the control system as described above to perform the method steps. The illustration of a particular order to the blocks does not necessarily imply that there is a required or preferred order for the blocks and the order and arrangement of the blocks may be varied. Furthermore, it may be possible for some steps to be omitted or added in other examples. Therefore, this disclosure also includes computer software that, when executed, is configured to perform any method disclosed herein, such as that illustrated in Figure 6. Optionally the computer software is stored on a computer readable medium, and may be tangibly stored.

Figure 7 illustrates a vehicle 700 according to an embodiment of the invention. The vehicle 700 in the present embodiment is an automobile, such as a wheeled vehicle, but it will be understood that the control system 100, 200 and active suspension system may be used in other types of vehicle.

It will be appreciated that various changes and modifications can be made to the examples disclosed herein without departing from the scope of the present application as defined by the appended claims.

As used here `module' refers to a unit or apparatus that excludes certain parts/components that would be added by an end manufacturer or a user.

As used here, 'connected' means "electrically interconnected" and/or "mechanically interconnected" either directly or indirectly. Electrical interconnection does not have to be galvanic. Where the control system is concerned, connected means operably coupled to the extent that messages are transmitted and received via the appropriate communication means.

Although examples have been described in the preceding paragraphs with reference to various examples, it should be appreciated that modifications to the examples given can be made without departing from the scope of the invention as set out in the appended claims. Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

Whilst endeavouring in the foregoing specification to draw attention to those features believed to be of particular importance it should be understood that the Applicant claims protection in respect of any patentable feature or combination of features hereinbefore referred to and/or shown in the drawings whether or not particular emphasis has been placed thereon.

## Claims

1. A control system (100) for a vehicle suspension system in a vehicle, the control system (100) comprising one or more controllers (110), the control system (100) configured to:
receive (302) a high torque mode signal indicative of the vehicle operating in a high torque mode, the high torque mode signal being determined in dependence on a torque demand on the vehicle suspension system being above a threshold for a predetermined time period;
determine (308) a maximum allowed value of the torque demand in dependence on the high torque mode signal and a current status of one or more components of the vehicle suspension system; and
output (306) a torque demand signal indicative of the determined maximum allowed value of the torque demand.

2. The control system (100) of claim 1, wherein, when determining the maximum allowed value of the torque demand, the control system (100) is configured to:
receive (316), from the one or more components of the vehicle suspension system, a current status signal (316a, 316b, 316c) of the one or more components of the vehicle suspension system, the current status signal indicating the current status of the one or more components of the vehicle suspension system;
determine (318) an adjustment parameter (404) of the vehicle suspension system based on the received current status signal; and
determine (320) a torque reduction value (402), based on the adjustment parameter.

3. The control system (100) of claim 2, wherein the torque reduction value is determined based on a mapping between the adjustment parameter (404) and the torque reduction value (402).

4. The control system (100) of claim 2 or 3, wherein the control system (100) is configured to:
determine the adjustment parameter (404) based on the received current status signal by comparing the received current status signal to a reference signal, the reference signal indicating a nominal state of the vehicle suspension system.

5. The control system (100) of any preceding claim, wherein the control system (100) is configured to:
set (314) an operational mode modifier (406) to indicate that the vehicle is operating in the high torque mode in dependence on determining that the vehicle is operating in the high torque mode; and
determine the maximum allowed value of the torque demand based on the current status of the one or more components of the vehicle suspension system in dependence on the operational mode modifier (406) indicating that the vehicle is in the high torque mode.

6. The control system (100) of claim 5, wherein the control system (100) is configured to:
determine the maximum allowed value of the torque demand in dependence on a torque reduction factor (322), the torque reduction value (402), and the operational mode modifier (406);
wherein the torque reduction factor (322) indicates a maximum allowed torque reduction, optionally wherein the control system is also configured to:
determine (328) the maximum allowed value of the torque demand in dependence on a nominal torque demand (326) and a product (324) of the torque reduction factor, the torque reduction value, and the operational mode modifier.

7. The control system (100) of any preceding claim, wherein the control system (100) is configured to:
determine that the vehicle is operating in the high torque mode in dependence on one or more of:
the torque demand of the vehicle suspension system being above the predetermined threshold for the predetermined time period;
a received GPS signal, indicative of the location of the vehicle, matching a stored location, the stored location indicating a location in which the high torque mode is required;
a received lateral acceleration signal indicating a lateral acceleration of the vehicle being above a predetermined lateral acceleration threshold for a second predetermined time period, the lateral acceleration signal being determined by a lateral acceleration sensor of the vehicle; and
a received vehicle speed signal, indicating a speed of the vehicle being above a predetermined vehicle speed threshold for a third predetermined time period, the vehicle speed signal being determined by a vehicle speed sensor of the vehicle.

8. The control system (100) of any preceding claim, wherein the torque demand on the vehicle suspension system is an RMS value of the torque demand on the vehicle suspension system.

9. The control system (100) of any preceding claim, wherein the high torque mode is a track driving mode.

10. The control system (100) of any of claims 2 to 9, wherein the adjustment parameter is determined from a plurality of adjustment parameters, wherein each of the plurality of adjustment parameters defines an available torque demand range with a different maximum torque demand value.

11. The control system (100) of any preceding claim, wherein the current status of the one or more components of the vehicle suspension system is a thermal status, and/or wherein the current status is determined in dependence on a hysteresis relation.

12. A method, comprising:
receiving (602) a high torque mode signal indicative of a vehicle operating in a high torque mode, the high torque mode signal being determined in dependence on a torque demand on a vehicle suspension system of the vehicle being above a threshold for a predetermined time period;
determining (604) a maximum allowed value of the torque demand in dependence on the high torque mode signal and a current status of one or more components of the vehicle suspension system; and
outputting (606) a torque demand signal indicative of the determined maximum allowed value of the torque demand.

13. A non-transitory, computer-readable storage medium storing instructions thereon that, when executed by a processor (120) of the control system (100) according to any of claims 1 to 11, causes the one or more electronic processors (120) to carry out a method according to claim 12.

14. A system comprising:
the control system (100) for a vehicle suspension system in a vehicle according to any of claims 1 to 11; and
an actuator (272, 282) of a roll control system (200).

15. A vehicle comprising the control system (100) of any of claims 1 to 11 or a system according to claim 14.
